Europäisches Patentamt

European Patent Office

Office européen des brevets

(11) Veröffentlichungsnummer: **0 462 499 A2**

# EUROPÄISCHE PATENTANMELDUNG

(21) Anmeldenummer: **91109641.0**

(22) Anmeldetag: **12.06.91**

(51) Int. Cl.⁵: **G02B 6/44**

(30) Priorität: **21.06.90 DE 4019735**

(43) Veröffentlichungstag der Anmeldung: **27.12.91 Patentblatt 91/52**

(84) Benannte Vertragsstaaten:
**AT BE CH DE DK ES FR GB GR IT LI NL SE**

(71) Anmelder: **ANT Nachrichtentechnik GmbH Gerberstrasse 33 W-7150 Backnang(DE)**

(72) Erfinder: **Olejak, Gerhard, Ing.-grad. Heineweg 7 W-7649 Kehl 16(DE)**

(54) **Lichtwellenleiterkabel.**

(57) Bei einem Lichtwellenleiter-Kabel mit einem Mantel aus Kunststoff besteht der Mantel aus einem strahlenvernetzbaren Kunststoff, wobei in Längsrichtung gesehen strahlenvernetzte und nicht strahlenvernetzte Abschnitte abwechseln. Ferner wird ein Verfahren zur Herstellung eines solchen Lichtwellenleiter-Kabels beschrieben.

EP 0 462 499 A2

Die Erfindung geht aus von einem Lichtwellenleiter-Kabel nach der Gattung des Hauptanspruchs.

Lichtwellenleiter-Kabel, die auf Flächen verlegt sind, können sich unter Umständen stark deformieren, was insbesondere für Innenkabel bei sehr hoher Kabel-Packungsdichte gilt. Ursache dafür sind die vorwiegend weich eingestellten thermoplastischen Kabelwerkstoffe. Eine weiche Einstellung ist jedoch im Hinblick auf die speziell bei Innenkabeln notwendige Flexibilität erforderlich.

Aufgabe der vorliegenden Erfindung ist es, eine Deformation von Lichtwellenleiter-Kabeln unter Beibehaltung einer ausreichenden Flexibilität zu verhindern.

Das erfindungsgemäße Lichtwellenleiter-Kabel mit den kennzeichnenden Merkmalen des Hauptanspruchs hat den Vorteil, daß durch die Mantelabschnitte mit höherem Elastizitätsmodul Querkräfte, die beispielsweise durch übereinander liegende Kabel auftreten, ohne störende Verformung aufgenommen werden. Dabei ist durch die nicht strahlenvernetzten Abschnitte eine ausreichende Flexibilität das Kabels gewährleistet.

Durch die in den Unteransprüchen aufgeführten Maßnahmen sind vorteilhafte Weiterbildungen und Verbesserungen der im Hauptanspruch angegebenen Erfindung und vorteilhafte Verfahren zur Herstellung des erfindungsgemäßen Lichtwellenleiter-Kabels möglich.

Ausführungsbeispiele der Erfindung sind in der Zeichnung anhand mehrerer Figuren dargestellt und in der nachfolgenden Beschreibung näher erläutert. Es zeigt:

Fig. 1   ein erfindungsgemäßes Lichtwellenleiter-Kabel,

Fig. 2   ein erfindungsgemäßes Lichtwellenleiter-Kabel im gebogenen Zustand,

Fig. 3   eine Anordnung zur Herstellung eines erfindungsgemäßen Lichtwellenleiter-Kabels und

Fig. 4   eine weitere Anordnung zur Herstellung eines erfindungsgemäßen Lichtwellenleiter-Kabels.

Gleiche Teile sind in den Figuren mit gleichen Bezugszeichen versehen.

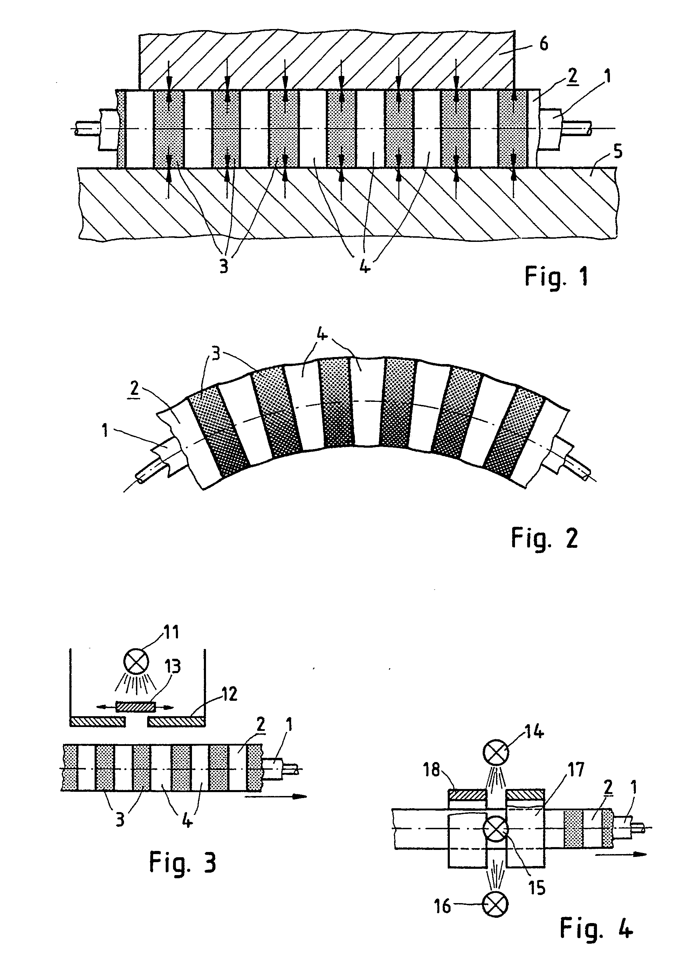

Fig. 1 stellt einen Abschnitt eines Lichtwellenleiter-Kabels dar, das aus dem Lichtwellenleiter 1 und einem Mantel 2 besteht. Als Werkstoffe für den Mantel 2 eignen sich insbesondere Polyolefine, PVC. Abschnitte 3 des Mantels sind strahlenvernetzt und weisen daher eine höhere Steifigkeit als die zwischen den Abschnitten 3 liegenden Abschnitte 4 auf, welche von der Strahlenvernetzung nicht erfaßt sind.

Das Lichtwellenleiter-Kabel liegt auf einer Fläche 5 auf und wird von einem lediglich schematisch dargestellten Gegenstand 6 belastet. Durch die höhere Steifigkeit der Abschnitte 3 wird die Last von diesen Abschnitten ohne wesentliche Verformung aufgenommen. Die dazwischen liegenden weichen Abschnitte 4 werden ebenfalls nur unwesentlich verformt und dementsprechend nicht belastet.

Fig. 2 erläutert die auch bei dem erfindungsgemäßen Lichtwellenleiter-Kabel bestehende Biegsamkeit, wobei sich allerdings die für das Biegen erforderliche Verformung auf die nicht strahlenvernetzten Abschnitte 4 konzentriert. Durch eine geeignete Dimensionierung der strahlenvernetzten Abschnitte 3 und der dazwischen liegenden Abschnitte 4 kann die Biegsamkeit und die Widerstandsfähigkeit gegenüber Verformungen an die jeweiligen Erfordernisse angepaßt werden.

Zur Vernetzung von Kunststoffen sind monoenergetische Elektronenstrahlen geeignet, wobei eine geeignete Auswahl bezüglich des jeweiligen Kunststoffes und sonstiger Gegebenheiten vorzunehmen ist. Verschiedene optische Fasern reagieren auf energiereiche Strahlen. Deshalb kann es erforderlich sein, die Eindringtiefe auf den Bereich des Mantels zu begrenzen.

Bei der Vorrichtung zur Herstellung eines erfindungsgemäßen Lichtwellenleiter-Kabels nach Fig. 3 wird das an sich fertige Kabel 1, 2 an einer Strahlenquelle 11 vorbeigeführt. Zwischen dem Kabel 1, 2 und der Strahlenquelle 11 befindet sich eine feste Blende 12 und eine bewegliche Blende 13. Letztere wird durch eine nicht dargestellte Antriebsvorrichtung in regelmäßigen Abständen gegenüber der festen Blende 12 verschoben, so daß die auf das Kabel wirkenden Strahlen pulsieren. Dieses wirkt mit der durch einen Pfeil 14 dargestellten Vorschubbewegung des Kabels derart, daß sich strahlenvernetzte Abschnitte 3 und nicht strahlenvernetzte Abschnitte 4 in Längsrichtung einander abwechseln.

Durch die Verwendung von lediglich einer Strahlenquelle bei der Vorrichtung nach Fig. 3 ist es zur Vernetzung der von der Strahlenquelle 11 abgewandten Teile des Mantels 2 erforderlich, das Kabel unter der Strahlenquelle periodisch um seine Längsachse zu drehen.

Demgegenüber stellt Fig. 4 eine Vorrichtung dar, bei welcher um das Lichtwellenleiter-Kabel herum ringförmig mehrere Strahlenquellen 14, 15, 16 angeordnet sind. Es können dann Strahlen mit geringerer Eindringtiefe verwendet werden. Damit jeweils nur ein Abschnitt vernetzt wird, sind ringförmige Blenden 17, 18 vorgesehen, die einen umlaufenden Spalt bilden.

**Patentansprüche**

1.   Lichtwellenleiter-Kabel mit einem Mantel aus Kunststoff, dadurch gekennzeichnet, daß der Mantel (2) aus einem strahlenvernetzbaren Kunststoff besteht und daß in Längsrichtung gesehen strahlenvernetzte (3) und nicht strahlenvernetzte Abschnitte (4) abwechseln.

2. Lichtwellenleiter-Kabel nach Anspruch 1, dadurch gekennzeichnet, daß die Länge der nicht strahlenvernetzten (4) und der strahlenvernetzten (3) Abschnitte etwa dem Radius des Lichtwellenleiter-Kabels entspricht.

3. Verfahren zur Herstellung des Lichtwellenleiter-Kabels nach Anspruch 1, dadurch gekennzeichnet, daß das mit dem Mantel (2) versehene Lichtwellenleiter-Kabel an einer pulsierenden Strahlenquelle (11, 12, 13; 14, 15, 16) vorbeigeführt wird.

4. Verfahren nach Anspruch 3, dadurch gekennzeichnet, daß die Strahlenquelle (11) mit Hilfe einer beweglichen Blende (13) pulsiert.

5. Verfahren nach Anspruch 3, dadurch gekennzeichnet, daß die Strahlenquelle derart geschaffen ist, daß die Strahlen lediglich in den Mantel des Lichtwellenleiter-Kabels eindringen.

6. Verfahren nach Anspruch 5, dadurch gekennzeichnet, daß das Lichtwellenleiter-Kabel (1, 2) von mehreren ringförmig angeordneten Strahlenquellen (14, 15, 16) bestrahlt wird.

Fig. 1

Fig. 2

Fig. 3

Fig. 4